# EUROPÄISCHE PATENTSCHRIFT

(11) **EP 0 476 668 B1**
(45) Veröffentlichungstag und Bekanntmachung des Hinweises auf die Patenterteilung: **04.08.1993**
(21) Anmeldenummer: 91115972.1
(22) Anmeldetag: 19.09.1991
(51) Int. Cl.: C02F 11/12, C02F 1/52, C02F 1/68

(54) **Verfahren und Vorrichtung zum Konditionieren und anschliessenden Entwässern von Schlämmen**
Method and device for conditioning and subsequent dewatering of sludges
Méthode et dispositif de conditionnement et de deshydratation subséquente des boues

(30) Priorität: 20.09.1990 DE 4029825
(43) Veröffentlichungstag der Anmeldung: 25.03.1992
(73) Patentinhaber: PASSAVANT-WERKE AG, 65322 Aarbergen 7 (DE)
(72) Erfinder: Geyer, Stephan, Chem. Ing., W-5429 Allendorf (DE)
(74) Vertreter: Glawe, Delfs, Moll & Partner

(56) Entgegenhaltungen:
- EP-A- 0 151 747
- EP-A- 0 172 649
- DE-A- 2 353 874
- DE-A- 3 344 275
- DE-A- 3 441 545

## Beschreibung

Die Erfindung betrifft ein Verfahren zum Konditionieren und anschließenden Entwässern von Schlamm von der im Oberbegriff des Anspruchs 1 angegebenen Art, sowie eine Vorrichtung zur Durchführung des Verfahrens.

Viele Arten von Schlämmen, insbesondere Schlämme aus der Abwasserreinigung oder der Wasseraufbereitung, sind in Entwässerungsvorrichtungen wie Kammerfilterpressen, Bandfilterpressen und dgl. nur schwer zu entwässern und müssen deshalb einer vorherigen Konditionierung zur Verbesserung der Entwässerbarkeit unterworfen werden. Diese Konditionierung erfolgt in der Regel durch Einmischung eines oder mehrerer chemischer Flockmittel. Unter diesem Ausdruck sollen in der vorliegenden Anmeldung sowohl Flockungsmittel, die die Ausflockung gelöster oder kolloidaler Schlamminhaltsstoffe bewirken, als auch die sogenannten Flockungshilfsmittel, die die Agglomeration und Verfestigung der Flocken begünstigen, verstanden werden. Bevorzugtes Anwendungsgebiet der Erfindung ist die Schlammkonditionierung durch Zugabe von Flockmittel in Form organischer Polymerverbindungen, sogenannter Polyelektrolyte.

Die durch die Konditionierung erzielte Entwässerbarkeit des Schlamms hängt entscheidend von der Menge und Größe und insbesondere auch von der Struktur und Stabilität der gebildeten Flocken ab. Es ist bekannt, daß nicht nur Art und Menge des zugegebenen Flockmittels, sondern auch die für das Einmischen aufgewendete Energie und die auf das Einmischen folgende Verweilzeit entscheidenden Einfluß auf die Flockungsbildung und -verfestigung haben. Aus "Abwassertechnik" Heft 1/1965, S. 4 ist es bekannt, die Menge des zu dosierten Flockmittels in Abhängigkeit von der Strömungsmenge und dem Feststoffgehalt des von der Beschickungspumpe geförderten Schlamms zu steuern. Aus DE-OS 37 43 428 ist es bekannt, die Menge, Größe und/oder Struktur der nach der Flockmittelzugabe vorhandenen Flocken zu messen und in Abhängigkeit davon die Menge des zugegebenen Flockmittels oder die aufgewendete Mischenergie oder eine Umschaltung zwischen auf der Saug- bzw. Druckseite der Beschickungspumpe liegenden Zugabestellen zu steuern.

Im Interesse einer möglichst sparsamen Verwendung des Flockmittels ist es erwünscht, alle die Flockenbildung beeinflussenden Parameter zu optimieren. Zu diesen gehört insbesondere auch die Verweilzeit, die nach der Einmischung des Flockmittels für die Ausbildung und Reifung der Schlammflocken bis zum Eintritt in die Entwässerungsvorrichtung zur Verfügung steht. Diese Verweilzeit hängt von der Strömungsgeschwindigkeit des Schlamms und der Strömungsstrecke zwischen Einmischstelle und Entwässerungsvorrichtung ab. Innerhalb der vorgegebenen Verweilzeit muß das Flockmittel mit dem Schlamm vermischt werden, mit dem Schlamm reagieren, Flocken ausbilden und eine solche Ausreifung der Flocken bewirken, daß diese bis zum Eintritt in die Entwässerungsvorrichtung stabil bleiben.

Bisher wurde bei der Planung einer Anlage die Festlegung der Einmischstelle derart, daß sich die gewünschte Verweilzeit ergibt, im wesentlichen aufgrund der Erfahrung vorgenommen, die bisher mit dem jeweils verwendeten Flockmittel gewonnen wurde. Dabei ist zunächst die Schwierigkeit zu berücksichtigen, daß im Laufe einer Filtrationscharge die Strömungsgeschwindigkeit des Schlamms stark abnimmt, und dadurch die Verweilzeit zunimmt, so daß eine z.B. auf die Anfangsbedingungen einer Filtrationscharge abgestellte Optimierung im weiteren Verlauf der Filtrationscharge bei abnehmender Strömungsgeschwindigkeit nicht mehr zu optimaler Flockenbildung oder optimaler Flockmittelausnutzung führt.

Andererseits wurde bisher nicht beachtet, daß von verschiedenen Herstellern angebotene Flockmittelprodukte sehr unterschiedliche Reaktions- und Flockungsreifungszeiten benötigen. Eine Optimierung der Anlage in Bezug auf ein Flockmittel kann sich deshalb bei Wechsel des Flockmittels als nicht mehr geeignet erweisen.

Der Erfindung liegt die Aufgabe zugrunde, ein Verfahren der genannten Art und eine Vorrichtung zu seiner Durchführung anzugeben, mit der eine flexible Anpassung der die Flockenbildung beeinflussenden Parameter an sich ändernde Betriebsbedingungen möglich ist.

Die erfindungsgemäße Lösung der Aufgabe ist im Anspruch 1 angegeben. Die Unteransprüche beziehen sich auf weitere vorteilhafte Ausgestaltungen des erfindungsgemäßen Verfahrens und der Vorrichtung zu seiner Durchführung.

Durch die Erfindung wird der Vorteil erzielt, daß der Abstand der Einmischstelle des Flockmittels von der Entwässerungsvorrichtung nicht starr festgelegt ist, sondern im Betrieb geändert werden kann. Dadurch kann die Anlage z.B. an das unteschiedliche Reaktionsverhalten von verschiedenen Flockmittelfabrikaten angepaßt werden und es können die sich während einer Filtrationscharge änderenden Strömungsbedingungen berücksichtigt werden.

Ausführungsformen der Erfindung werden im folgenden anhand der Zeichnungen näher erläutert. Es zeigt:
- Fig. 1: ein vereinfachtes Schema einer Vorrichtung zum Konditionieren und Entwässern von Schlamm gemäß einer ersten Ausführungsform der Erfindung;
- Fig. 2: das Fließschema einer Vorrichtung gemäß einer zweiten Ausführungsform der Erfindung;
- Fig. 3: das Fließschema einer Vorrichtung gemäß einer dritten Ausführungsform der Erfindung;
- Fig. 4: einen Querschnitt durch die Schlammleitung mit einer Einmischvorrichtung für Flockmittel, die bei der Vorrichtung gemäß Fig. 1 oder 2 verwendet werden können.
- Fig. 5: einen Längsschnitt durch die Schlammleitung mit einer anderen Ausführungsform einer Einmischvorrichtung, die ebenfalls bei einer Vorrichtung gemäß Fig. 1 oder Fig. 2 verwendet werden kann.

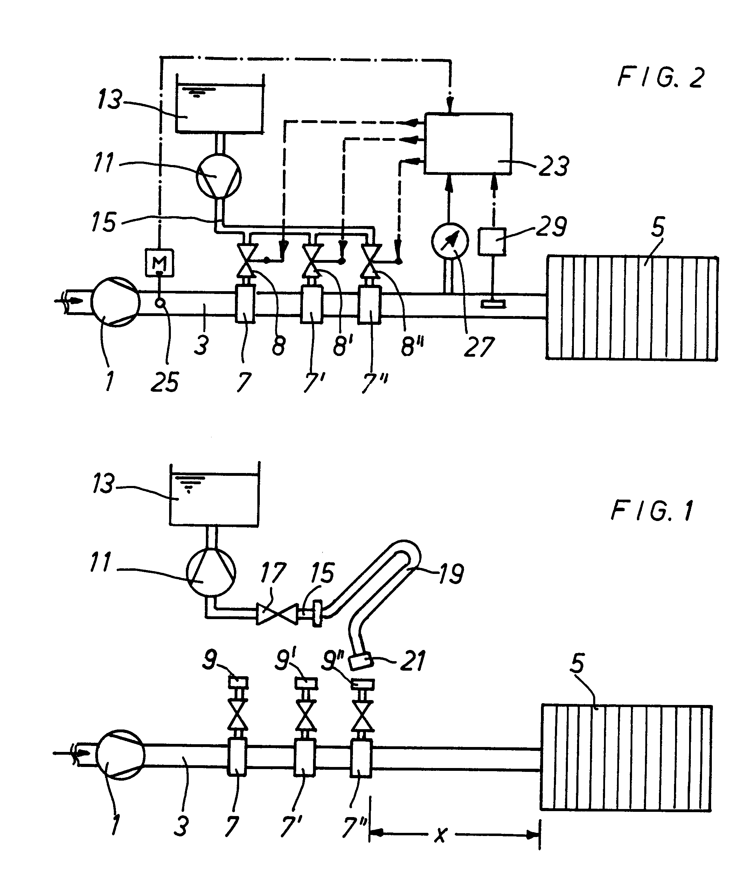

Bei der Vorrichtung gemäß Fig. 1 wird Schlamm von einer Beschickungspumpe 1 über eine Schlammleitung 3 einer Entwässerungsvorrichtung 5 zugeführt. Diese ist in der Zeichnung schematisch als Kammerfilterpresse dargestellt. Die Erfindung ist aber auch bei Entwässerungsvorrichtungen anderer Art, z.B. Bandfilterpressen, anwendbar.

In der Schlammleitung 3 sind in Abständen voneinander drei Einmischstellen 7, 7', 7'' angeordnet. Jede Einmischstelle ist über ein Absperrorgan mit einer Anschlußkupplung 9, 9', 9'' versehen. Eine Dosierpumpe 11 für Flockmittel ist saugseitig mit einem Vorratsbehälter 13 für Flockmittellösung verbunden. An die Druckseite der Dosierpumpe 11 ist über eine Leitung 15 mit Absperrorgan 17 ein flexibler Schlauch 19 verbunden, der an seinem Ende ein Kupplungsstück 21 trägt, mit dem der Schlauch 19 wahlweise an eine der Kupplungen 9, 9', 9'' angekuppelt werden kann. Auf diese Weise kann wahlweise eine der Einmischvorrichtungen 7, 7', 7'' mit Flockmittel aus dem Behälter 13 beschickt werden, was nichts anderes bedeutet, als daß der Abstand x der jeweils wirksamen Einmischstelle von der Entwässerungsvorrichtung 5 verändert wird.

Diese einfache Ausführungsform der Erfindung ist z.B. dann mit Vorteil anwendbar, wenn nacheinander verschiedene Fabrikate von Flockmitteln aus dem Behälter 13 über die Dosierpumpe 4 zugeführt werden müssen, wobei für jedes der verschiedenen Flockmittel jeweils eine der Einmischvorrichtungen 7, 7', 7'' den optimalen Abstand x von der Entwässerungsvorrichtung 5 hat.

Bei der Ausführungsform nach Fig. 2 ist jede der in der Schlammleitung 3 in Abständen angeordneten Einmischvorrichtungen 7 über je ein Absperrorgan 8, 8', 8'' permanent mit der von der Dosierpumpe 11 beschickten Dosiermittelleitung 15 verbunden. Die Absperrorgane 8, 8', 8'' können von einer Steuervorrichtung 23 durch entsprechende Steuersignale auf- und zugesteuert werden, so daß wahlweise eine oder mehrere der Einmischvorrichtungen 7, 7', 7'' in bzw. außer Betrieb gesetzt werden können. Die Steuerung mittels der Steuervorrichtung 23 kann automatisch in Abhängigkeit von verschiedenen, laufend gemessenen Betriebsparametern erfolgen. Einerseits kann an einer Meßstelle 25 am Austritt der Beschickungspumpe 1 die Strömungsgeschwindigkeit und der Festoffgehalt des von der Pumpe 1 geförderten Schlamms gemessen und ein entsprechendes Signal der Steuervorrichtung 23 zugeführt werden. In der Nähe des Eintritts der Entwässerungsvorrichtung 5 kann mit einem Druckmeßgerät 27 der Druck in der Schlammleitung 3 erfaßt werden. Schließlich kann ebenfalls in der Nähe des Eintritts der Entwässerungsvorrichtung 5 mittels einer optischen Schlammbildsonde 29 die Zahl, Größe und/oder Struktur der durch die Flockmittelzugabe gebildeten Flocken erfaßt und entsprechende Signale ebenfalls der Steuervorrichtung 23 zugeführt werden. Entsprechende optische Sonden sind bekannt. Sie können entweder als einfache Trübungsmesser ausgebildet sein oder es kann sich um kompliziertere Geräte zur optischen Analyse der Schlammflockenkonturen handeln, wie z.B. aus DE-OS 37 43 428 bekannt.

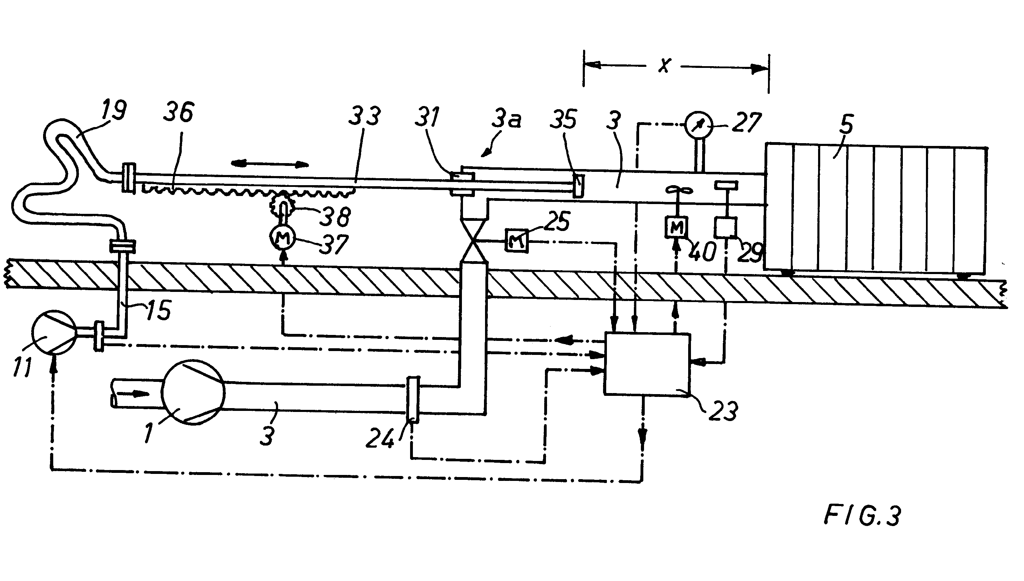

Bei der Ausführungsform nach Fig. 3 fördert die Beschickungspumpe 1 den Schlamm über eine abgewinkelte Schlammleitung 3 zur Entwässerungsvorrichtung 5. An der Abwinklungsstelle 3a ist über eine Gleitdichtung 31 eine verschiebbare Lanze 33 in die Schlammleitung 3 eingeführt. Die Lanze 33 ist an ihrem äußeren Ende über einen flexiblen Schlauch 19 mit der Flockmittelleitung 15 verbunden, die über die Dosierpumpe 11 mit Flockmittellösung beschickt wird. An dem in die Schlammleitung 3 ragenden Ende trägt die Lanze 33 einen Einmisch- und Verteilerkopf 35, der vorzugsweise mehrere am Umfang verteilte oder auch axial gerichtete Austrittsöffnungen für die Flockmittellösung aufweist. Die Lanze 33 kann in ihrer Längsrichtung durch einen Verschiebemotor 37 verstellt werden, beispielsweise mittels eine Ritzels 38, das mit einer an der Lanze 33 vorgesehenen Verzahnung 36 zusammenwirkt. Auch ein Spindelantrieb ist denkbar. Durch Verschieben der Lanze 33 mittels des Verstellantriebs 37 kann der Abstand x des Einmischkopfes 35 von der Eintrittsstelle der Entwässerungsvorrichtung 5 stufenlos verändert werden.

Die Verstellung der Lanze 33 mittels des Verstellantriebes 37 kann automatisch erfolgen mittels einer Steuervorrichtug 23, die Betätigungssignale an den Stellmotor 37 und eventuell auch an die Dosierpumpe 11 für das Flockmittel liefert. Die Steuervorrichtung 23 empfängt Meßsignale von verschiedenen Meßvorrichtungen, wie z.B. Meßgeräten 24, 25 zum Bestimmen der Strömungsgeschwindigkeit und des Feststoffgehaltes des Schlamms in der Schlammleitung 3, einem Druckmesser 27 zum Bestimmen des Druckes in der Schlammleitung 3, einem optischen Meßgerät 29 zum Erfassen der Größe, Menge und Struktur der gebildeten Schlammflocken, und einem Meßgerät 26 zum Bestimmen der Menge der zugeführten Flockmittellösung.

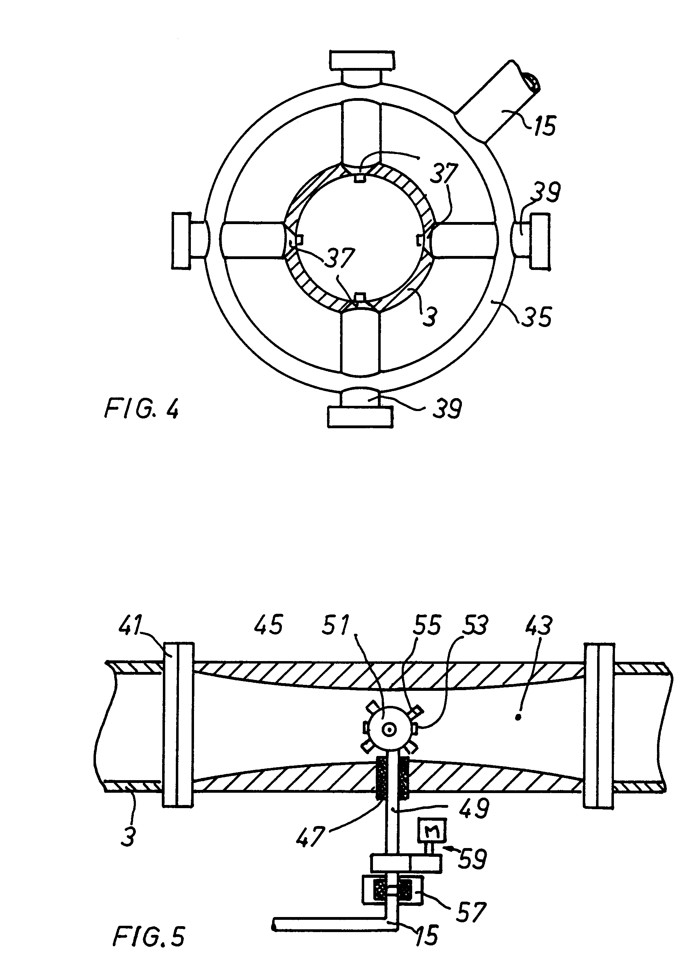

Damit die erfindungsgemäß ermöglichte Änderung der Strömungsstrecke des Schlammes zwischen der Einmischstelle und dem Eintritt in die Entwässerungsvorrichtung auch zu einer Optimierung der tatsächlich für die Flockungsbildung und -reifung zur Verfügung stehenden Verweilzeit führt, ist es wichtig, daß bereits an der Einmischstelle eine möglichst vollständige Vermischung des Flockmittels mit dem Schlamm erfolgt. Anderenfalls würde ein nicht exakt definierbarer Teil der Strömungsstrecke wegen unvollständiger Vermischung des Flockmittels mit dem Schlamm nicht für die Flockenbildung und -reifung zur Verfügung stehen. Erfindungsgemäß sollten deshalb an den Einmischstellen für das Flockmittel Einmischvorrichtungen verwendet werden, die eine möglichst wirksame und vollständige Vermischung des Flockmittels mit dem Schlamm gewährleisten. Ausführungsformen für solche Einmischvorrichtungen sind in Fig. 4 und 5 dargestellt.

Zusätzlich kann zur Intensivierung der Einmischung ein motorisch angetriebener Mischrührer 40 in der Schlammleitung vorgesehen sein, und zwar unmittelbar stromab des Verstellbereichs der Lanze 33 und vor dem optischen Meßgerät 29. Die Drehzahl des Rührers und damit die von ihm eingebrachte Mischenergie kann ebenfalls von der Steuervorrichtung 23 gesteuert werden.

Gemäß Fig. 4 ist die Schlammleitung 3 von einer Ringleitung 35 umgeben, die an die Zuführleitung 15 für das Flockmittel angeschlossen ist. Eine Anzahl von z.B. vier Einmischdüsen 37, die in Winkelabständen um die Achse der Schlammleitung 3 angeordnet sind, sind mit der Ringleitung 35 verbunden. Jeder Einmischdüse 37 kann an der Außenseite der Ringleitung 35 eine mittels Schraubdeckel oder dgl. verschließbare Reinigungsöffnung 39 zugeordnet sein.

Bei der Ausführungsform nach Fig. 5 ist in die Schlammleitung 3 über Schraubflansche 41 ein Zwischenstück 43 eingesetzt, dessen Wandung an der Innenseite eine düsenartige Profilierung 45 zur Erhöhung der Strömungsgeschwindigkeit und Verbesserung der Einmischwirkung aufweisen kann. Diese Profilierung ist aber nicht notwendig, es kann sich auch um ein glattwandiges Rohrstück handeln. In das Rohrstück 43 ist mittels einer abdichtenden Drehlagerung 47 ein Rohrstück 49 gelagert, das an seinem Ende einen Mischkopf 51 trägt. Der Mischkopf 51 ist mit mehreren, z.B. vier um seine Achse verteilten Austrittsdüsen 53 versehen. Ferner trägt der Mischkopf 51 abstehende Leitbleche oder Flügel 55, die zur Verwirbelung der Schlammströmung an der Einmischstelle dienen.

Das Rohrstück 49 ist mittels einer abdichtenden Drehlagerung 57 mit der Flockmittel-Zuführleitung 15 verbunden, und kann mittels eines Antriebsmotors 59 um seine Achse gedreht werden. Auf diese Weise dreht sich der Mischkopf 51 um eine zur Achse der Schlammleitung 3 senkrechte Achse, und durch die damit bewirkte kreisende Bewegung der Mischdüsen 53 und der Leitbleche 55 wird eine sehr gleichmäßige und intensive Vermischung des zugeführten Flockmittels in die Schlammströmung bewirkt.

Abweichend von der Ausführungsform nach Fig. 5 kann der Mischkopf 51 auch derart angeordnet werden, daß seine Drehachse parallel zur Achse der Schlammleitung 3, oder in einem Winkel dazu geneigt angeordnet ist.

Jede der verschiedenen Einmischvorrichtungen 7, 7', 7'' der Vorrichtungen nach Fig. 1 oder 2 kann gemäß der Ausführungsform nach Fig. 4 oder Fig. 5 ausgebildet sein.

Auch bei der Ausführungsform nach Fig. 3 kann der am Ende der Lanze 33 vorgesehene Mischkopf 35 so ausgebildet sein, daß er, oder die gesamte Lanze 33, um die Längsachse gedreht werden kann, wodurch ähnliche Effekte erreichbar sind, wie bei dem Mischkopf gemäß Fig. 5.

## Patentansprüche

1. Verfahren zum Konditionieren und anschließenden Entwässern von Schlamm, bei dem der Schlamm mittels einer Beschickungspumpe über eine Schlammleitung einer Entwässerungsvorrichtung zugeführt wird, ein Flockungsmittel an einer in der Schlammleitung vorgesehenen Einmischstelle in den Schlamm eingemischt wird und in der vom Schlamm zwischen der Einmischstelle und der Entwässerungsvorrichtung zurückgelegten Strömungsstrecke durch Reaktion des Flokungsmittels mit den Schlamminhaltstoffen die Flockenbildung und Flockenstabilisierung erfolgt, dadurch **gekennzeichnet**, daß während des Entwässerungsvorgangs die Länge (x) der vom Schlamm zwischen der Einmischstelle und der Entwässerungsvorrichtung zurückgelegten Strömungsstrecke verändert wird.

2. Verfahren nach Anspruch 1, dadurch **gekennzeichnet,** daß zwei oder mehrere in unterschiedlichen Abständen von der Entwässerungsvorrichtung in der Schlammleitung vorgesehene Einmischstellen wahlweise in Betrieb genommen werden.

3. Verfahren nach Anspruch 2, dadurch **gekennzeichnet**, daß mindestens drei Einmischstellen vorgesehen sind.

4. Verfahren nach Anspruch 2 oder 3, dadurch **gekennzeichnet**, daß die Einmischstellen mit unterschiedlichen Flockmitteln beschickt werden.

5. Verfahren nach Anspruch 1, dadurch **gekennzeichnet**, daß die Einmischstelle in Längsrichtung der Schlammleitung verschoben wird.

6. Verfahren nach Anspruch 1, dadurch **gekennzeichnet**, daß die Veränderung der Länge der Strömungsstrecke in Abhängigkeit von der Menge und/oder dem Feststoffgehalt des von der Beschickungspumpe geförderten Schlamms, und/oder in Abhängigkeit vom Druck in der Schlammleitung, und/oder in Abhängigkeit von Menge, Größe und Struktur der stromab der Einmischstelle vorhandenen Flocken gesteuert wird.

7. Vorrichtung zum Konditionieren und Entwässern von Schlamm, mit einer Entwässerungsvorrichtung (5), die über eine Schlammleitung (3) mit einer Beschickungspumpe (1) verbunden ist, und einer in die Schlammleitung (3) mündenden Einmischvorrichtung (7), an die eine Zuführ- und/oder Dosiereinrichtung (11) für ein Flockmittel angeschlossen ist, dadurch **gekennzeichnet**, daß in Abständen längs der Schlammleitung zwei oder mehr Einmischvorrichtungen (7, 7', 7'') angeordnet sind, die wahlweise in und außer Betrieb setzbar sind.

8. Vorrichtung nach Anspruch 7, dadurch **gekennzeichnet**, daß die Einmischvorrichtungen an dieselbe Zuführ- und Dosiervorrichtung (11) für Flockmittel angeschlossen und wahlweise absperrbar sind.

9. Vorrichtung nach Anspruch 7, dadurch **gekennzeichnet**, daß die Zuführ- und Dosiervorrichtung wahlweise an eine der Einmischvorrichtungen (7, 7', 7'') ankuppelbar ist.

10. Vorrichtung nach Anspruch 7, dadurch **gekennzeichnet**, daß die Einmischvorrichtungen (7, 7', 7'') an verschiedenen Dosiervorrichtungen für unterschiedliche Flockmittel angeschlossen oder ankuppelbar sind.

11. Vorrichtung zum Konditionieren und Entwässern von Schlamm, mit einer Entwässerungsvorrichtung (5), die über eine Schlammleitung (3) mit einer Beschickungspumpe (1) verbunden ist, und einer in die Schlammleitung (3) mündenden Einmischvorrichtung (7), an die eine Zuführ- und/oder Dosiereinrichtung (11) für ein Flockmittel angeschlossen ist, dadurch **gekennzeichnet**, daß die Einmischvorrichtung (33, 35) im Inneren der Schlammleitung (3) verschiebbar angeordnet ist.

12. Vorrichtung nach einem der Ansprüche 7 bis 11, dadurch **gekennzeichnet**, daß die oder jede Einmischvorrichtung (7, 7', 7'', 35) eine Anzahl von um eine Achse verteilt angeordneten Austrittsöffnungen (37, 53) aufweist.

13. Vorrichtung nach Anspruch 11, dadurch **gekennzeichnet**, daß die Austrittsöffnungen (37) in Winkelabständen am Umfang der Schlammleitung (3) verteilt einmündet.

14. Vorrichtung nach Anspruch 11, dadurch **gekennzeichnet**, daß die Einmischvorrichtung einen in die Schlammleitung (3) ragenden Mischkopf (35, 51) aufweist, der eine Anzahl von um die Achse des Mischkopfs verteilt angeordneten Austrittsöffnungen (53) aufweist.

15. Vorrichtung nach Anspruch 14, dadurch **gekennzeichnet**, daß die Achse des Mischkopfs rechtwinklig oder im Winkel geneigt zur Längsachse der Schlammleitung (3) angeordnet ist.

16. Vorrichtung nach Anspruch 11 und 14, dadurch **gekennzeichnet**, daß der Mischkopf (35) koaxial zur Längsachse der Schlammleitung (3) angeordnet und längs dieser verschiebbar ist.

17. Vorrichtung nach einem der Ansprüche 12 bis 16, dadurch **gekennzeichnet**, daß jeder Austrittsöffnung (37) eine verschließbare Reinigungsöffnung (39) zugeordnet ist.

## Claims

1. A process for the conditioning and subsequent dewatering of sludge, in which the sludge is fed by means of a feed pump via a sludge conduit to a dewatering apparatus, a flocculating agent is mixed into the sludge at a mixing point provided in the sludge conduit, and the flocculation and flock stabilisation is carried out, in the flow section travelled by the sludge between the mixing point and the dewatering apparatus, by reaction of the flocculating agent with the sludge constituents, characterised in that during the dewatering process the length (x) of the flow section travelled by the sludge between the mixing point and the dewatering apparatus is varied.

2. A process according to Claim 1, characterised in that two or more mixing points provided in the sludge conduit are selectively set in operation at different distances from the dewatering apparatus.

3. A process according to Claim 2, characterised in that at least three mixing points are provided.

4. A process according to Claim 2 or 3, characterised in that the mixing points are fed with different flocculating agents.

5. A process according to Claim 1, characterised in that the mixing point is displaced in the longitudinal direction of the sludge conduit.

6. A process according to Claim 1, characterised in that the variation in the length of the flow section is controlled as a function of the quantity and/or the solids content of the sludge fed by the feed pump, and/or as a function of the pressure in the sludge conduit, and/or as a function of the quantity, size and structure of the flocks present downstream of the mixing point.

7. An apparatus for the conditioning and dewatering of sludge, having a dewatering apparatus (5) which is connected with a feed pump (1) via a sludge conduit (3), and having a mixing device (7) which discharges into the sludge conduit (3) and to which a supply and/or metering device (11) for a flocculating agent is connected, characterised in that at intervals along the sludge conduit there are arranged two or more mixing devices (7, 7', 7'') which can be selectively rendered operative and inoperative.

8. An apparatus according to Claim 7, characterised in that the mixing devices can be connected to the same supply and metering device (11) for the flocculating agent and can be selectively shut off.

9. An apparatus according to Claim 7, characterised in that the supply and metering device (11) can be selectively coupled to one of the mixing devices (7, 7', 7'').

10. An apparatus according to Claim 7, characterised in that the mixing devices (7, 7', 7'') are connected or can be coupled to different metering devices for different flocculating agents.

11. An apparatus for the conditioning and dewatering of sludge, having a dewatering apparatus (5) which is connected with a feed pump (1) via a sludge conduit (3), and having a mixing device (7) which discharges into the sludge conduit (3) and to which a supply and/or metering device (11) for a flocculating agent is connected, characterised in that the mixing device (33, 35) is arranged displaceably inside the sludge conduit (3).

12. An apparatus according to any one of Claims 7 to 11, characterised in that the or each mixing device (7, 7', 7'', 35) has a number of outlet openings (37, 53) arranged spaced apart around an axis.

13. An apparatus according to Claim 11, characterised in that the outlet openings (37) discharge at angular distances apart on the periphery of the sludge conduit (3).

14. An apparatus according to Claim 11, characterised in that the mixing device has a mixing head (35, 51) which projects into the sludge conduit (3) and which has a number of outlet openings (53) arranged spaced apart around the axis of the mixing head.

15. An apparatus according to Claim 14, characterised in that the axis of the mixing head is disposed at right angles or inclined at an angle to the longitudinal axis of the sludge conduit (3).

16. An apparatus according to Claim 11 and Claim 14, characterised in that the mixing head (35) is disposed coaxially to the longitudinal axis of the sludge conduit (3) and is displaceable along the latter.

17. An apparatus according to any one of Claims 12 to 16, characterised in that each outlet opening (37) is associated with a closable cleaning opening (39).

## Revendications

1. Méthode de conditionnement et de déshydratation subséquente de boue, dans laquelle la boue est transférée à un dispositif de déshydratation au moyen d'une pompe d'alimentation par l'intermédiaire d'une canalisation de boue, un floculant est incorporé à la boue en un point d'incorporation implanté sur la canalisation de boue, et la formation et la stabilisation des flocons s'effectuent par réaction du floculant avec les constituants de la boue sur le trajet d'écoulement parcouru par cette dernière entre le point d'incorporation et le dispositif de déshydratation, caractérisée en ce que la longueur (x) du trajet d'écoulement parcouru par la boue entre le point d'incorporation et le dispositif de déshydratation varie pendant l'opération de déshydratation.

2. Méthode selon la revendication 1, caractérisée en ce que deux ou plusieurs points d'incorporation implantés sur la canalisation de boue à des distances différentes du dispositif de déshydratation sont mis en service de manière sélective.

3. Méthode selon la revendication 2, caractérisée en ce qu'il est prévu au moins trois points d'incorporation.

4. Méthode selon la revendication 2 ou 3, caractérisée en ce que chacun des points d'incorporation est alimenté avec un floculant différent.

5. Méthode selon la revendication 1, caractérisée en ce que le point d'incorporation est déplacé dans la direction longitudinale de la canalisation de boue.

6. Méthode selon la revendication 1, caractérisée en ce que la variation de longueur du trajet d'écoulement est commandée en fonction de la quantité et/ou de la teneur en matière solide de la boue refoulée par la pompe d'alimentation, et/ou en fonction de la pression régnant dans la canalisation de boue, et/ou en fonction de la quantité, de la taille et de la structure des flocons se trouvant en aval du point d'incorporation.

7. Dispositif de conditionnement et de déshydratation de boue, comprenant un dispositif de déshydratation (5), qui est relié à une pompe d'alimentation (1) par l'intermédiaire d'une canalisation de boue (3), et un dispositif d'incorporation (7) qui débouche dans la canalisation de boue (3) et auquel est relié un dispositif (11) d'alimentation et/ou de dosage de floculant, caractérisé en ce qu'il est prévu, de manière espacée le long de la canalisation de boue, deux ou plusieurs dispositifs d'incorporation (7, 7', 7'') qui peuvent être mis en et hors service de manière sélective.

8. Dispositif selon la revendication 7, caractérisé en ce que les dispositifs d'incorporation sont reliés au même dispositif (11) d'alimentation et de dosage de floculant et peuvent être fermés de manière sélective.

9. Dispositif selon la revendication 7, caractérisé en ce que le dispositif d'alimentation et de dosage peut être connecté, de manière sélective, à l'un des dispositifs d'incorporation (7, 7', 7'').

10. Dispositif selon la revendication 7, caractérisé en ce que les dispositifs d'incorporation (7, 7', 7'') peuvent être reliés ou connectés à divers dispositifs de dosage destinés à différents floculants.

11. Dispositif de conditionnement et de déshydratation de boues, comprenant un dispositif de déshydratation (5), qui est relié à une pompe d'alimentation (1) par l'intermédiaire d'une canalisation de boue (3), et un dispositif d'incorporation (7) qui débouche dans la canalisation de boue (3) et auquel est relié un dispositif (11) d'alimentation et/ou de dosage de floculant, caractérisé en ce que le dispositif d'incorporation (33, 35) est logé de manière coulissante à l'intérieur de la canalisation de boue (3).

12. Dispositif selon l'une des revendications 7 à 11, caractérisé en ce que les dispositifs d'incorporation (7, 7', 7'', 35), ou chacun d'eux, comporte plusieurs ouvertures de sortie (37, 53) réparties autour d'un axe.

13. Dispositif selon la revendication 11, caractérisé en ce que les ouvertures de sortie (37) débouchent à la circonférence de la canalisation de boue (3) et sont réparties selon des intervalles angulaires.

14. Dispositif selon la revendication 11, caractérisé en ce que le dispositif d'incorporation comporte une tête mélangeuse (35, 51) qui pénètre dans la canalisation de boue (3) et qui comporte plusieurs ouvertures de sortie (53) réparties autour de l'axe de la tête mélangeuse.

15. Dispositif selon la revendication 14, caractérisé en ce que l'axe de la tête mélangeuse est perpendiculaire à l'axe longitudinal de la canalisation de boue (3) ou incliné selon un angle par rapport audit axe.

16. Dispositif selon la revendication 11 et 14, caractérisé en ce que la tête mélangeuse (35) peut se déplacer coaxialement à l'axe longitudinal de la canalisation de boue (3) et le long dudit axe.

17. Dispositif selon l'une des revendications 12 à 16, caractérisé en ce que, à chaque ouverture de sortie (37) correspond une ouverture de nettoyage (39) qui peut être obturée.
